# EUROPEAN PATENT APPLICATION

(11) **EP 1 736 944 A1**
(43) Date of publication of application: **27.12.2006**
(21) Application number: 05253559.8
(22) Date of filing: 09.06.2005
(51) Int. Cl.: G07G 1/00, G07G 3/00, G07C 9/00, A47F 9/04, G01G 19/414

(54) **System and method of verifying item placement on a security scale**

(71) Applicant: NCR International, Inc., Dayton, Ohio 45479 (US)
(72) Inventor: White, Daniel Frederick, Lilburn Georgia 30047 (US)
(74) Representative: Williamson, Brian

(57) **Abstract**

A system and method of verifying item placement on a security scale. The system includes a computer for receiving incremental weight signals from a security weight scale, wherein some of the incremental weight signals are unrelated to placement of items on the security weight scale, and an item detector for detecting movement of the item from a scanner following scanning of the item and for generating an item detection signal, wherein the computer ignores the incremental weight signal unless it receives the item detection signal within a predetermined time period preceding receipt of the incremental weight signal.

## Description

The present invention relates to self-service checkout systems, and specifically to a system and method of verifying item placement on a security scale.

Self-service checkout systems generally include security scales for determining weights of purchased items. The weights are compared to reference weights to determine whether a substitution has occurred.

Wind and other atmospheric disturbances in the vicinity of a self-service checkout system can fool security systems into believing that an item has been placed on a security scale, when in fact no item placement has occurred. Wind can be especially problematic in stores that leave doors open.

Therefore, it would be desirable to provide a system and method which verifies item placement on a security scale before implementing weight-based security procedures.

In accordance with the present invention, a system and method of verifying item placement on a security scale is provided.

The system includes a computer for receiving incremental weight signals from a security weight scale, wherein some of the incremental weight signals are unrelated to placement of items on the security weight scale, and an item detector for detecting movement of the item from a scanner following scanning of the item and for generating an item detection signal, wherein the computer ignores the incremental weight signal unless it receives the item detection signal within a predetermined time period preceding receipt of the incremental weight signal.

Embodiments of the present invention will now be described, by way of example, with reference to the accompanying drawings, in which:
Fig. 1 is a block diagram of a self-service checkout system;
Fig. 2 is a an example of a self-service checkout system configured with the item detection system of the present invention; and
Fig. 3 is a flow diagram illustrating a security method.

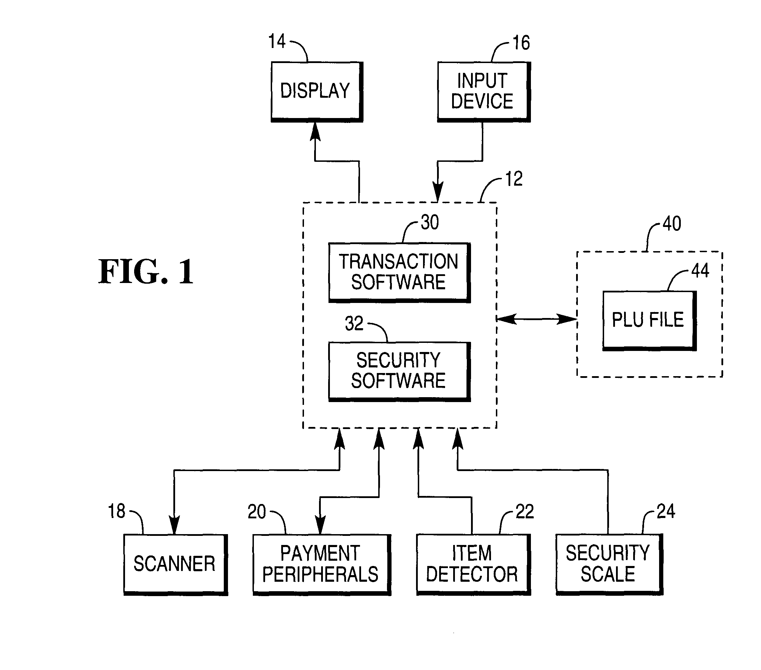

Referring to Fig. 1, self-service checkout system 10 primarily includes computer 12, display 14, input device 16, scanner 18, payment peripherals 20, item detector 22, and security scale 24.

Computer 12 executes transaction software 30, which records items for purchase and processes payment. Transaction software 30 obtains item information from scanner 18 and queries transaction server 40 for price information.

Computer 12 also executes security software 32, which compares weights of scanned items to incremental weight increases on security scale 24. If the item fails the test, security software 32 alerts the operator and initiates procedures to correct the error or alert security personnel.

Display 14 may include a liquid crystal display.

Input device 16 may include a keyboard.

Display 14 and input device 16 may alternatively be combined as a touch screen.

Scanner 18 reads bar code labels on purchased items. Scanner 10 may also include an integral scale for weighing produce items.

Payment peripherals 20 may include various peripherals for completing payment, including a card reader, bill and coin acceptors, bill and coin dispensers, signature capture device, and receipt printer.

Item detector 22 detects items placed onto security scale 24. Item detector 22 may include a motion detector, or a camera, such as a charge coupled device camera. Use of a camera could provide additional security information, such as size, shape, and color information.

Security scale 24 weighs items to be purchased. During a typical transaction, security scale 24 weighs items following scanning.

Transaction server 40 stores price look-up file 44, which may include reference weight information.

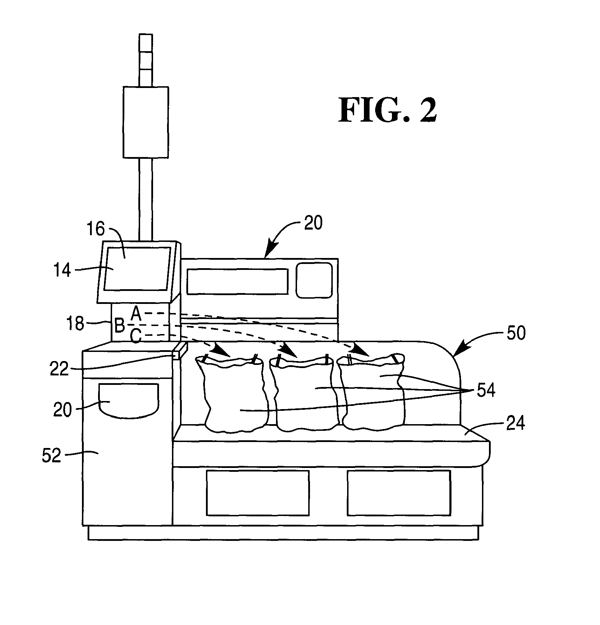

With reference to Fig. 2, an example self-service checkout system 10, configured with item detector 22, is illustrated.

Security scale 24 is located within bag well 50.

Scanner 18 is located within pedestal 52.

Display 14 and input device 16 are mounted above scanner 18 as a touch screen.

Payment peripherals 20 are mounted above bag well 50.

Item detector 22 is mounted on the bag well side of pedestal 52. From this location, item detector 22 can detect movement of items passing between scanner 18 and bag well 50, on any of paths A, B, or C, with minimal or no obstruction of hand movements from scanner 18 to any of bags 54.

If item detector 22 is a camera, item detector 22 may detect additional information, such as item size, shape, and color information. If oriented towards bag well 50, item detector 22 may also detect placement of items into bags 54.

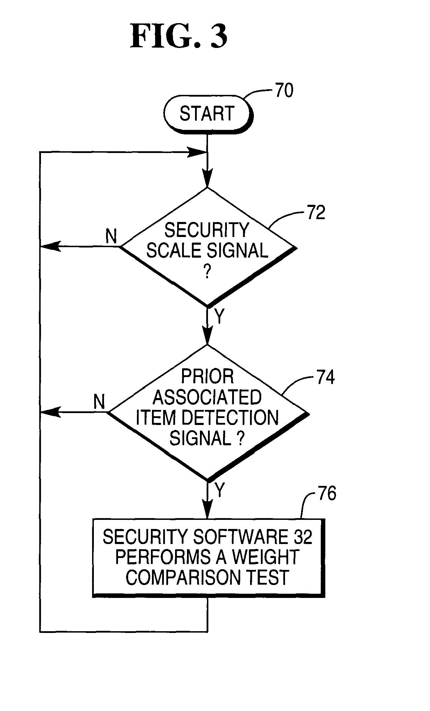

With reference to Fig. 3, operation of security software 32 is illustrated, beginning with Start 70.

In step 72, security software 32 waits for an incremental weight signal from security scale 24. If security software 32 receives an incremental weight signal, operation proceeds to step 74.

In step 74, security software 32 determines whether item detector produced an item detection signal within a predetermined time period prior to receiving the incremental weight signal. The time period is typically about a second. If not, security software 32 ignores the weight signal and operation returns to step 72 to wait for another signal from security scale 24. Otherwise, operation proceeds to step 76.

In step 76, security software 32 performs a weight comparison test involving a comparison of the incremental weight information in the incremental weight signal to reference weight information in PLU file 44. If the item fails the test, security software 32 alerts the operator and initiates procedures to correct the error or alert security personnel. After the item passes the test, operation returns to step 72 to wait for another signal from security scale 24.

Although the present invention has been described with particular reference to certain preferred embodiments thereof, variations and modifications of the present invention can be effected within the scope of the following claims.

## Claims

1. A method of verifying item placement on a security scale comprising the steps of:
receiving an incremental weight signal from the security scale;
determining whether an item detection signal was received from an item detector within a predetermined time period prior to receipt of the incremental weight signal; and
ignoring the incremental weight signal if the item detection signal was not received.

2. A method as claimed in claim 1, further comprising the step of:
performing a weight comparison test involving a comparison of incremental weight information in the incremental weight signal to reference weight information if the item detection signal was received.

3. A method as claimed in claim 1 or claim 2, wherein the sensing step includes the substep of taking images of the bag well and processing the images to detect changes within the bag well.

4. A method as claimed in any preceding claim, wherein the sensing step includes the substep of sensing size of the item.

5. A method as claimed in any preceding claim, wherein the sensing step includes the substep of sensing shape of the item.

6. A method as claimed in any preceding claim, wherein the sensing step includes the substep of sensing color of the item.

7. A method as claimed in any preceding claim, further comprising the steps of:
performing a weight comparison test involving a comparison of the incremental weight to an expected weight;
actuating a security warning if the incremental weight fails to equal the expected weight.

8. A system for verifying placement of an item on a security scale comprising:
a computer for receiving incremental weight signals from a security weight scale, wherein some of the incremental weight signals are unrelated to placement of items on the security weight scale; and
an item detector for detecting movement of the item from a scanner following scanning of the item and for generating an item detection signal;
wherein the computer ignores the incremental weight signal unless it receives the item detection signal within a predetermined time period preceding receipt of the incremental weight signal.

9. A system as claimed in claim 8, wherein the computer performs a weight comparison test involving a comparison of an incremental weight from the security weight scale to an expected weight and actuates a security warning if the incremental weight fails to equal the expected weight.

10. A system as claimed in claim 8 or claim 9, wherein the item detector is mounted to a side of the bag well.

11. A method as claimed in any of claims 8 to 10, wherein the item detector comprises a motion sensor.

12. A self-service checkout system comprising:
a computer;
a bar code scanner in communication with said computer for reading a bar code label on an item;
a security weight scale in communication with said computer for weighing the item and for generating an incremental weight signal, wherein said security weight scale is located in a bag well adjacent the bar code scanner; and
an item detector for detecting movement of the item following scanning by the bar code scanner and for generating an item detection signal;
wherein the computer ignores the incremental weight signal unless it receives the item detection signal within a predetermined time period preceding receipt of the incremental weight signal.
